# EUROPEAN PATENT SPECIFICATION

(11) **EP 0 375 363 B1**
(45) Date of publication and mention of the grant of the patent: **28.12.1994**
(21) Application number: 89313284.5
(22) Date of filing: 19.12.1989
(51) Int. Cl.: C08L 83/07, C08J 9/04, C08L 83/14, C08L 83/05, C09J 7/04

(54) **Solventless silicon compositions for release paper**
Lösemittelfreie Silikonzusammensetzungen für Trennpapier
Compositions de silicone sans solvant pour un papier de séparation

(30) Priority: 19.12.1988 JP 320198/88
(43) Date of publication of application: 27.06.1990
(73) Proprietor: Shin-Etsu Chemical Co., Ltd., Chiyoda-ku Tokyo 100 (JP)
(72) Inventor: Hara, Yasuaki, Annaka-shi Gunma-ken (JP); Ogawa, Masahiko, Takasaki-shi Gunma-ken (JP)
(74) Representative: Holmes, Michael John

(56) References cited:
- US-A- 3 269 938
- US-A- 3 553 164
- US-A- 4 849 491
- EUROPEAN POLYMER JOURNAL, vol. 24, no. 7, 1988, pages639-645, Marsh Barton, Exeter, Devon, GB; R. MERCIER et al.: "Photochemistry ofPolymeric Systems - VIII. Photo-crosslinking of Polysiloxanes Including Cinnamic, Furactylic or alpha-Cyano beta-Styrylacrylic Exter Groups : A Comparative Study"

## Description

The present invention relates to silicone compositions for release paper which impart excellent releasability and slip properties to substrates, more particularly to solventless silicone compositions for release paper which may be applied without the use of organic solvents.

Conventionally, silicone compositions have been used as release agents to prevent the adhesion and fixing between substrates such as paper or plastics and adhesive substances, or to improve the slip between paper and paper, paper and plastics, a plastic film and a plastic film, paper and human fingers, plastics and human fingers, or plastics and metals.

These release agent silicone compositions have been widely used in organic solvent solutions or as aqueous emulsions (see, for example, Japanese Patent Publication Nos. Sho 35-13709, Sho 36-1397, and Sho 46-26798). Since the organic solvent solution-type silicone release agents contain, as a main constituent, gum-like diorganopolysiloxanes of a high molecular weight or of a high polymerization degree, they need large volumes of solvents in their use, and thus inevitably cause air pollution if the solvents are vented into the atmosphere, and they require a substantial cost in the solvent recovery system. In contrast, the aqueous emulsion-type silicone release agents cause no serious air pollution; however, they might cause some environmental pollution from the use of emulsifying agents, and they are required to be heated for a longer time at a high temperature for film formation.

To solve these problems, solventless-type release agent silicone compositions have been proposed which contain virtually no water or organic solvents. Examples of these silicone compositions may be found, for example, in U.S. Patent Nos. 3,922,443, 4,057,596, and 4,071,644, and Japanese Patent Publication No. Sho. 52-39791. However, the cured film obtained from these compositions has a low polymerization degree, because these compositions use a vinylsiloxane or hydrogensiloxane having a viscosity between 50 and 5,000cSt at 25°C as a main constituent, and as a result it is inferior in mechanical strength in comparison to that obtained from the conventional organic solvent solution-type silicone compositions stated above. In addition to this disadvantage, it is unsatisfactory in slip properties, and thus the conventional solventless silicone compositions have limited applications.

For example, if the conventional solventless release agent silicone compositions are used for release agents for a kraft tape with a pressure-sensitive adhesive, the application of the kraft tape to corrugated boards is not smoothly done, since the cured film formed on the reverse of the kraft tape is poor in slip properties, and the slip between hands and the release surface is not good. Sometimes workers hurt their hands. If this happens, workers cannot apply sufficient force to the kraft tape, and thus the pressure sensitive adhesive does not satisfactorily adhere to the corrugated board, so that peeling of the tape from the corrugated board sometimes happens. It has also been pointed out that where conventional solventless release agent silicone compositions are applied to paper or a plastic film to make a slip sheet for a cassette tape, the magnetic tape is sometimes damaged, or troubles occur in tape rotation, because the slip between the tape and the slip sheet is not good.

It has further been pointed out that if release paper is manufactured by applying and curing the conventional solventless release agent silicone compositions to paper or a plastic film, the cured silicone film thus obtained contacts a metal or plastic roll before the release paper is wound up. The poor slip properties of the cured film may cause damage to the silicone surface, giving rise to partial breakdown of the release performance of the release paper thus manufactured. The poor slip properties also may make the wind-up of the coated paper or plastic film unsmooth, and thereby cause processing troubles.

To solve these problems of the conventional solventless release agent silicone compositions, various slip-imparting materials, such as dimethylsiloxane oils, polyether modified oils, surfactants, waxes and metal soaps, have been added. However, satisfactory results have not yet been obtained. Since virtually none of these slip-imparting materials is very compatible with the silicone compositions, the coating fluid thus obtained becomes unstable, and curing often fails to occur. The most serious problem is that almost all of these slip-imparting materials tend to migrate onto the surface of the cured silicone film, and this causes a decrease in the adhesive force between the cured film and the adhesive.

Other methods for improving slip properties have been proposed, as for example in Japanese Patent Laid-open Publication Nos. Sho. 61-159480 and Sho. 63-101453. However, these methods are still unsatisfactory.

The object of the invention is to provide a solventless silicone composition for release paper which produces a cured film having excellent slip properties, releasability and subsequent adhesion. In the present invention, "release paper" embraces the use of any substrate, such as paper, plastic film, or metal foil, and is not limited to release paper composed of paper.

It has now been found that the foregoing object may be attained by employing as the base material to be cured a partially branched alkenyl siloxane. Thus a cured film produced from the silicone composition of the invention has a similar level of slip properties to that produced from a conventional solvent-borne release agent silicone composition, and does not require the use of slip imparting materials which tend to migrate onto the surface of a cured film.

According to one aspect of the invention there is provided a solventless silicone composition for release paper comprising:
(A) 100 parts by weight of an organopolysiloxane having per molecule at least two silicon-bonded alkenyl groups and at least one silicon-bonded group of the formula [X]: 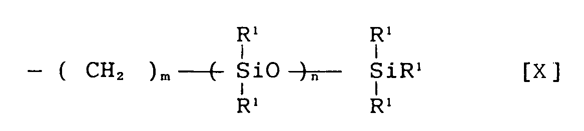 (wherein each group R¹ , which may be the same or different, represents a monovalent hydrocarbon group, n is an integer of 5 to 100, and m is an integer of 2 to 8), the alkenyl group content of said organopolysiloxane being in the range 0.5 to 10.0 mole %;
(B) 1 to 100 parts by weight of an organohydrogenpolysiloxane having per molecule at least two silicon-bonded hydrogen atoms; and
(C) a catalytically effective amount of a platinum catalyst; with the proviso that the sum of the number of alkenyl groups per molecule in component (A) and silicon-bonded hydrogen atoms per molecule in component (B) is at least five.

Each component of the composition of the invention will be explained in detail.

The organopolysiloxane employed as component (A) in the invention has at least two silicon-bonded alkenyl groups in a molecule. This partially branched organopolysiloxane has a comb-like structure, and may be represented by, for example, the following formulae: 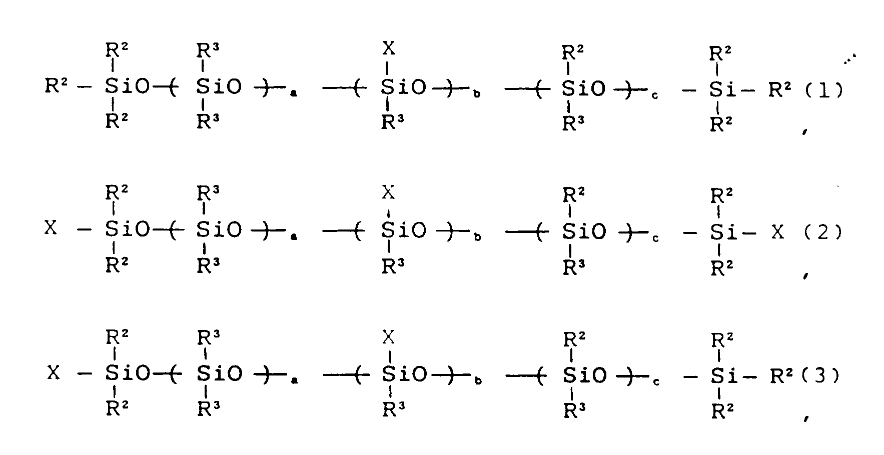
(where X is a group of formula [X] as defined above, a, b and c are positive integers, and each group R² and R³, which may be the same or different, represents a monovalent hydrocarbon group).

Each of the groups R¹, R² and R³, which may be the same or different, may for example be selected from alkyl, e.g. C₁₋₈ such as methyl, ethyl, propyl, butyl, etc.; aryl, e.g. C₆₋₁₂ such as phenyl; aryl C₁₋₄ alkyl such as benzyl or trityl; cycloalkyl, e.g. C₅₋₇ such as cyclohexyl; and, in the case of R₂, alkenyl, e.g. C₂₋₈ such as vinyl, allyl, etc. Any of the above groups may be substituted by, for example, one or more halogen atoms, cyano groups, etc.

It will be appreciated that it is necessary for a proportion of the groups R² to represent alkenyl groups, which preferably will have terminal olefinic unsaturation. The most preferred alkenyl groups are vinyl and allyl. Correspondingly in formula [X] m is preferably 2 or 3.

From the standpoint of practical use, eighty mole percents (80mole%) of R¹, R², and R³ should preferably be methyl groups. By changing the ratio b/(a+b) in formulae (1)-(3) it is possible to control the level of the slip properties of a cured film produced from the compositions; the preferred range of this ratio is 0.001 to 0.1.

The organopolysiloxane may be prepared by reacting an organopolysiloxane, for example of formula [I]: 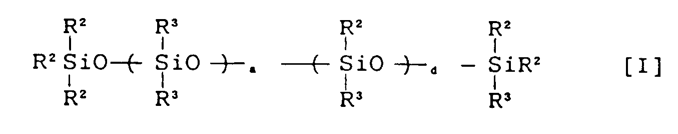
(wherein R², R³ and a are as hereinabove described, and d is (b+c)) with an organopolysiloxane having a silicon-attached hydrogen atom at one end of the molecule, for example, a compound of formula [II]: 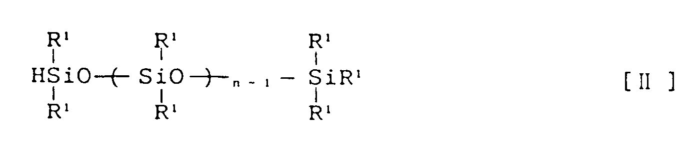
(wherein n is as hereinbefore defined), conveniently in a solvent such as toluene or tetrahydrofuran and in the present of a catalyst for a hydrosilyl reaction, such as chloroplatinic acid, typically at a reaction temperature of 40 to 120°C.

The organopolysiloxane having a silicon-attached hydrogen atom at one end of the molecule may be prepared by, for example, the following known method: A trialkylsilanol (R₃SiOH where R is an alkyl group) is copolymerized with a hexaorganotrisiloxane in an acetonitrile solvent in the presence of a penta-coordinate catalyst such as one represented by formulae [III] or [IV] 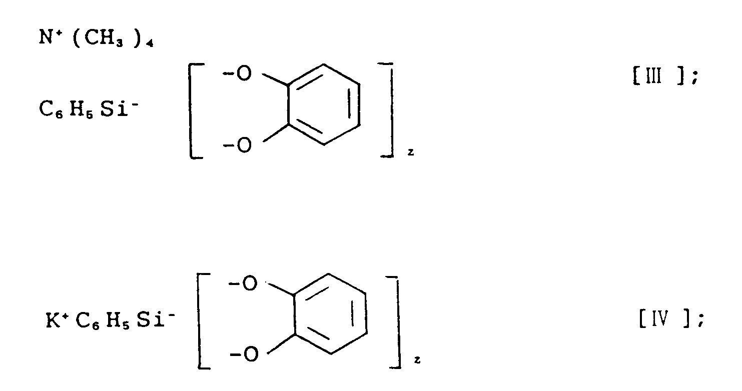
where z is an integer, whereby an organopolysiloxane having a silanol radical represented by formula [V] at one end is produced 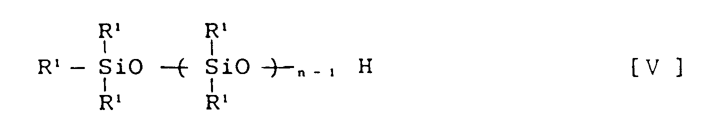
(wherein R¹ and n are as hereinbefore described). The thus-produced organopolysiloxane is reacted with a dialkylchlorosilane in the presence of a hydrochoric acid-uptaking agent (e.g. triethylamine, pyridine, etc.).

Examples of the alkenyl group in the organopolysiloxane of component (A) are vinyl, allyl and propenyl groups, the most preferred alkenyl group being vinyl. The amount of the alkenyl group in the organopolysiloxane should be at least 0.5 mole % to ensure that the silicone compositions cure well. The amount should also be not more than 10.0 mole % so that the peel resistance of cured films produced from the silicone compositions is not too high, such that adhesion of adhesives to the cured film becomes unstable. The amount of the alkenyl group is preferably within the range 1.0 to 8.0 mole %.

The organohydrogen polysiloxane component (B) of the silicone composition of the invention may be chosen from known organohydrogenpolysiloxanes which contain per molecule at least two, preferably at least three, silicon-bonded hydrogen atoms which may undergo an addition reaction with an alkenyl group. Preferably at least 90mole% of the silicon-bonded hydrocarbon groups are methyl groups. Examples of this kind of polysiloxane are homopolymers or copolymers consisting of units such as (CH₃)HSiO, HSiO_{1.5}, (CH₃)₂SiO, CH₃SiO_{1.5}, (CH₃)₂HSiO_{o.5}, and (CH₃)₃SiO_{0.5}. The structure of the polysiloxane component (B) may be linear, branched or cyclic; a polysiloxane having a viscosity of 10 to 500cSt at 25°C is preferred. The amount of the polysiloxanes may be that in proportion to the amount of the alkenyl groups contained in component (A), and is generally 1 to 100 parts by weight per 100 parts by weight of the amount of the alkenyl groups contained in component (A), from the standpoint of the formation of film and peel properties.

The third component (Composition (C)) of the silicone composition of the invention is a catalyst for an addition reaction of components (A) and (B), and may be selected from among such catalysts conventionally used for this kind of reaction, e.g. chloroplatinic acid, an alcoholic or an aldehydic solution of chloroplatinic acid, or complexes of chloroplatinic acid and various olefines. Platinum black and various carriers on which platinum is placed may also be used. The catalyst may be present in any amount which is catalytically effective; this amount will usually be 1 to 1,000ppm based on component (A), to obtain a good cured film and from an economic standpoint.

The sum of the number of alkenyl groups per molecule in component (A) and the number of silicon-bonded hydrogen atoms in component (B) should be at least five to make a crosslinked polymer structure and to make the thus-copolymerized silicone composition insoluble to solvents.

The silicone compositions of the invention may be obtained by blending specific amounts of the three components (A), (B) and (C). Component (C) is preferably added after obtaining a uniform blend of components (A) and (B). If necessary, reaction retardants such as various organic nitrogen compounds, organic phosphate compounds, acetylene compounds, e.g. acetylenic alcohols such as 3-methyl-1 butyne-3-ol), oxime compounds or organic chloro compounds, may be added as a fourth component, for example to reduce the activity of the platinum catalyst at room temperature and thereby extend the pot life of the compositions. The viscosity of the compositions of the invention is preferably 50 to 20,000cSt in order to achieve good workability in the coating process. The viscosity may be selected to take account of the amount of composition to be applied, the coating method, or the nature of the substrate material to be coated. For example, lower or moderate viscosities (e.g. 50 to 3,000cSt) may advantageously be used if the amount of coating on substrates is chosen to be in the range of 0.3 to 3.0g/m², e.g. in the coating of metal foils or plastics such as polyethylene-laminated papers by means of known coating machines such as roll coaters, gravure coaters, air-knife coaters, curtain-flow coaters, offset-transfer roll coaters, etc. Higher viscosities than those in this range are preferred in the coating of substrates such as glassine papers, kraft papers and clay-undercoated papers, which readily absorb release agent compositions.

Substrates on which the compositions of the invention have been coated may be heated for 5 to 60 seconds at a temperature of 80 to 200°C, or irradiated for at least 0.2 seconds with a UV irradiator (e.g. having a power of about 80w/cm) so that a cured film is formed on the surface of the substrate. The thus-formed cured film imparts slip properties to the substrate, and coated substrates such as paper, plastic films and metal foils become useful as release paper. The manual application of an adhesive tape may then be smoothly done, because the slip properties of the cured silicone surface are good. In addition, since the cured silicone surface has a light release force and good slip properties, the range of uses of the release agent silicone compositions of the invention is broad in comparison with that of the conventional solventless release agent silicone compositions.

As stated above, since the silicone compositions of the invention employ partially branched vinylsiloxanes as the base siloxanes to be cured, they may be applied without the need for organic solvents. Their use is therefore beneficial as regards energy savings, safety, and avoidance of environmental pollution, and may also impart a good level of slip properties which has previously not been attained by conventional solventless silicone compositions. In addition, the subsequent adhesion is excellent, and the release force is light and constant.

Release agent silicone compositions of the invention are illustrated in more detail by reference to the following examples, wherein the term "parts" means "parts by weight," and the values of viscosity were all measured at 25°C.

### EXAMPLE 1

To a solution of 100g of toluene and 100g of dimethylpolysiloxane (vinyl value: 7.2 x 10⁻⁴ mole/g) containing 4.5mole% of vinyl groups, having dimethylsilyl groups at its molecular ends, and of a viscosity of 800cSt at 25°C, 1g of a 1% isopropanol solution of chloroplatinic acid was added, and the mixture was heated up to 80°C. To this mixture 160g of dimethylpolysiloxane (polymerization degree 60) having a SiH group at one end was added and the reaction was initiated. After addition of the dimethylpolysiloxane, the reaction mixture stood for two hours at 80 to 100°C. Thereafter, 1g of active carbon was added to this reaction mixture to adsorb the catalyst in the reaction mixture, and the reaction mixture was filtered.

From the thus-obtained filtrate toluene was distilled off, and an oil (oil A) having a vinyl value of 1.4 x 10⁻⁴ mole/g and a viscosity of 18,000cSt was obtained.

To 100g of oil A was added 3g of methylhydrogenpolysiloxane, both of whose end groups are trimethylsilyl, having a viscosity of 20cSt at 25°C, and 1g of of 3-methyl-1-butyne-3-ol of the formula [VI] 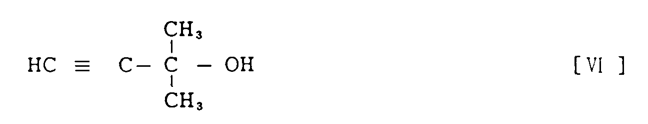
was further added. This mixture was uniformly mixed and then 2g of a complex salt of platinum and vinylsiloxane (200ppm in terms of platinum content) was added, and then these components were sufficiently mixed to prepare product 1.

Curability of product 1, peel resistance, slip properties, and the subsequent adhesion of a cured film from product 1 were measured by the methods described below, and the results of these measurements are shown in Table 1.

### Measurement of Curability

Product 1 was coated on the surface of polyethylene laminated fine paper in a coated amount of 0.8g per 1m² of the surface area, and the coated paper was then heated for 20 seconds at 120°C in a hot air circulation-type drying oven. The cured surface was rubbed with a finger and the curability was judged by the dropping-off of the cured composition from the cured surface, and the haze of the cured surface was estimated. The result was very good, and the mark "Ⓞ" in Table 1 means good curability.

### Measurement of Peel Resistance

Product 1 was coated on the surface of a polyethylene laminated fine paper in an amount of 0.8g per 1m² of surface area, and heated for 30 seconds at 140°C in the drying oven, whereby a cured film was formed on the laminated paper. On the surface ORIBAIN BPS-5127 (a product name for an acrylic-type solventborne adhesive manufactured by Toyo Ink Manufacturing Co., Ltd.) or ORIBAIN BPS-2411 (a product name for a rubber-type solventborne adhesive manufactured by the same company) was coated, and heated for 3 minutes at 100 °C. Thereafter, a piece of paper having a weight of 40g per 1m², was applied to this treated surface, and a pressure of 20g/cm² was applied to this paper and kept for a certain time at 25°C. Thereafter, this paper, together with the adhesive, the cured film, and the laminated paper, was cut into strips having a width of 5cm, to get test pieces. The 180-degree release test was conducted by peeling the applied paper from the test pieces at a rate of 0.3m/min, 30m/min, and 60m/min by using a tensile strength tester, and the peel force(g) required to peel was measured for each test piece.

### Measurement of Slip Properties

A cured film of product 1 was formed on the surface of a sheet-like substrate by the same method used in the peel resistance test above. On its surface was placed a piece of urethane rubber or styrene-butadiene rubber. A weight of 200g was placed on the rubber, and then the rubber was pulled in a direction parallel to the cured silicone surface at a rate of 0.3m/min, and the kinetic frictional force was obtained by dividing the force(g) required to pull the rubber by 200g. This procedure employed is similar to that described in ASTM D 1894-63. Slip properties were also evaluated by sliding a finger on a cured film surface, and the results were estimated in terms of the following standards, and the results are shown in Table 1 using the following marks:
- Ⓞ: : slid very well
- ○: : slid well
- X: : did not slide very much
- X X: : did not slide at all

### Measurement of Subsequent Adhesion

A cured film of product 1 was formed on the surface of a sheet-like substrate by the same method as used in the peel strength test given above. On its surface was applied a polyester adhesive tape No. 31B (a product name for a polyester pressure sensitive adhesive tape manufactured by Nitto Denko Corporation), and heated for 20 hours at 70°C under a pressure of 20g/cm², and then the applied polyester tape was peeled. Thereafter, the peeled polyester tape was applied to a stainless-steel sheet, and the 180-degree release test was conducted at a rate of 0.3m/min, and force 1 required to peel the tape from the stainless-steel surface was measured.

To make a comparison, tape No. 31B was applied to a polytetrafluoroethylene sheet, then heated for 20 hours at 70°C under a pressure of 20g/cm², and then peeled from the sheet. This 180-degree release test was also conducted by applying the peeled tape to a stainless-steel surface, and force 2 required to peel the tape from the stainless-steel surface was measured. The subsequent adhesion was expressed in % by dividing force 1 by force 2.

### EXAMPLE 2

Oil B, having a vinyl value of 8.2 x 10⁻⁵ mole/g, and having a viscosity of 12,000cSt, was prepared by repeating the same process as that used to prepare oil A in Example 1, but by replacing 160g of the dimethylpolysiloxane having a SiH group at one end and having a polymerization degree of 60 used in Example 1 with 120g of the same dimethylpolysiloxane, but having a polymerization degree of 30. Thereafter, composition II was prepared by repeating the same process as that used to obtain composition I in Example 1, but by replacing 100g of oil A with 100g of oil B. By using composition II , the same physical properties were measured by using the same methods as those described in Example 1, and the results obtained are also shown in Table 1.

### EXAMPLE 3

Oil C, having a vinyl value of 1.29 x 10⁻⁴ mole/g and having a viscosity of 1,500cSt, was prepared by repeating the same process as that used to prepare oil A in Example 1 by replacing 160g of the dimethylpolysiloxane having a SiH group at one end and having a polymerization degree of 60 as used in Example 1 with 40g of the same dimethylpolysiloxane but having a polymerization degree of 10. Thereafter, composition III was prepared by repeating the same process as that used to prepare oil A in Example 1, but by replacing 100g of oil A with 100g of oil C.

By using composition III, the same physical properties were measured by the same methods as those described in Example 1, and the results obtained are also shown in Table 1.

### COMPARATIVE EXAMPLE 1

To 100g of vinyldimethylpolysiloxane having a vinyl group only at one end, and having a viscosity of 1,000cSt at 25°C which replaces the vinyl group - containing dimethylpolysiloxane used in Example 1, 2g of the methylhydrogenpolysiloxane, both of whose end groups are trimethylsilyl, having a viscosity of 20cSt at 25°C, and 1g of 3-methyl-1-butyne-3-ol, were added, and these compounds were uniformly mixed. Thereafter, 2g of a complex salt of platinum and vinylsiloxane (200ppm in terms of platinum content) were added, and these components were sufficiently mixed. Composition VI was thus prepared.

By using composition VI, the same physical properties were measured by the same methods as those described in Example 1, and the results obtained are also shown in Table 1.

### COMPARATIVE EXAMPLE 2

To 100g of dimethylpolysiloxane containing 4.5mole% of vinyl groups both of whose end groups are dimethylvinylsilyl groups, having a viscosity of 800cSt at 25°C, 3g of methylhydrogenpolysiloxane both of whose end groups are trimethylsilyl, having a a viscosity of 20cSt at 25°C, and 1g of 3-methyl-1-butyne-3-ol were added, and these components were uniformly mixed. To this mixture 2g of a complex salt of platinum and vinylsiloxane (200ppm in terms of platinum content ) were added, and these components were sufficiently mixed. Composition V was thus prepared.

By using composition V, the physical properties were measured by the same methods as described in Example 1, and the results are shown in Table 1.

### EXAMPLE 4

To composition 1 in Example 1, 4 parts of 4-methoxybenzophenone, a photosensitizer, was added. The thus-prepared composition was coated on polyethylene laminated fine paper in an amount of 0.8g/m². The coated substrate was irradiated for 3 seconds with a low-pressure mercury vapor lamp of 80w/cm placed 8cm from the coated substrate. The curability, peel resistance, slip properties, and residual adhesive rate, were measured. The results are shown in Table 1.

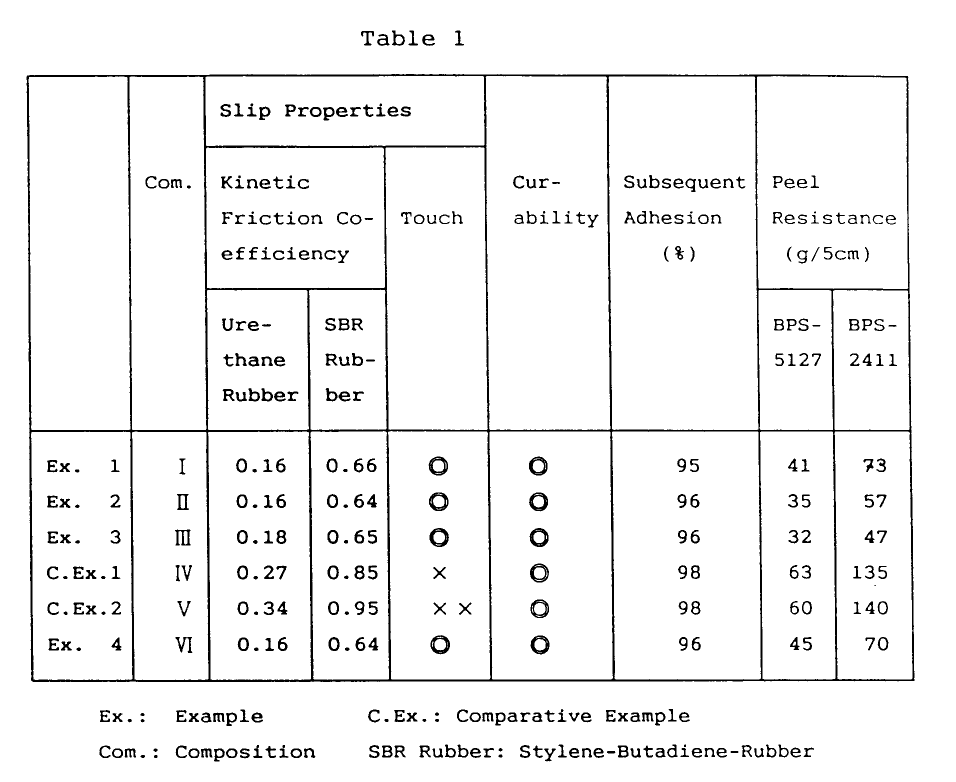

As is apparent from the results in Table 1, the release agent silicone compositions of the invention may form a cured film which has good slip properties, a good subsequent adhesion, and a light release force.

## Claims

1. A solventless silicone composition for release paper comprising:
(A) 100 parts by weight of an organopolysiloxane having per molecule at least two silicon-bonded alkenyl groups and at least one silicon-bonded group of formula [X] 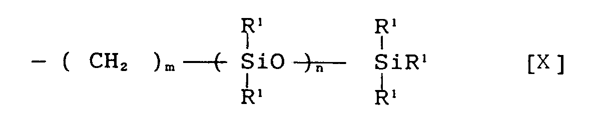 (wherein each group R¹, which may be the same or different, represents a monovalent hydrocarbon groups, n is an integer of 5 to 100, and m is an integer of 2 to 8), the alkenyl group content of said organopolysiloxane being in the range 0.5 to 10.0 mole %;
(B) 1 to 100 parts by weight of an organohydrogenpolysiloxane having per molecule at least two silcon-bonded hydrogen atoms; and
(C) a catalytically effective amount of a platinum catalyst;
with the proviso that the sum of the number of alkenyl groups per molecule in component (A) and silicon-bonded hydrogen atoms per molecule in component(B) is at least 5.

2. A silicone composition as claimed in claim 1 wherein the organopolysiloxane of component (A) has any of the structures of formulae (1), (2) and (3): 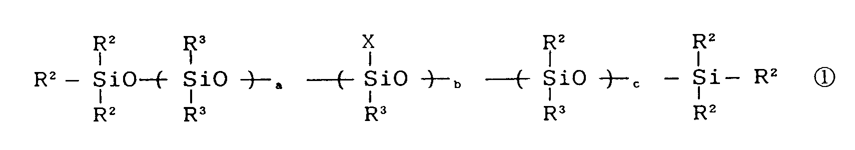 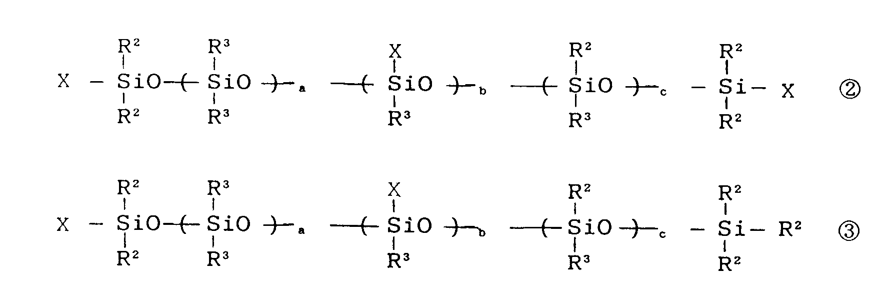 (wherein X is as defined in claim 1; a, b and c are positive integers; and each of the groups R¹, R² and R³, which may be the same or different, are selected from alkyl, aryl, aralkyl and cycloalkyl groups, with the proviso that R² may additionally be an alkenyl group, and such groups substituted by halogen atoms or cyano groups.

3. A silicone composition as claimed in claim 2 wherein about 80 mole% of the groups R¹, R² and R³ are methyl groups.

4. A silicone composition as claimed in claim 2 or claim 3 wherein the alkenyl groups R² are vinyl or allyl.

5. A silicone composition as claimed in any of the preceding claims wherein m is 2 or 3.

6. A silicone composition as claimed in any of claims 2 to 5 wherein the ratio of b to (a+b) is 0.001 to 0.1.

7. A silicone composition as claimed in any of the preceding claims wherein the alkenyl group contained in the organopolysiloxane of component (A) is vinyl.

8. A silicone composition as claimed in any of the preceding claims wherein the content of the alkenyl group in the organopolysiloxane of component (A) is 1.0 to 8.0 mole%.

9. A silicone composition as claimed in any of the preceding claims wherein the organohydrogenpolysiloxane of component (B) has at least three silicon-bonded hydrogen atoms per molecule.

10. A silicone composition as claimed in any of the preceding claims wherein the organohydrogenpolysiloxane of component (B) is methylhydrogenpolysiloxane.

11. A silicone composition as claimed in any of claims 1 to 9 wherein at least 90 mole% of the silicon-bonded organic groups in the organohydrogenpolysiloxane of component (B) are methyl groups.

12. A silicone composition as claimed in any of the preceding claims wherein the viscosity of component (B) is 10 to 500cSt at 25°C.

13. A silicone composition as claimed in any of the preceding claims wherein the amount of component (C) is 1 to 1,000 ppm in terms of platinum content based on the weight of component (A).

14. A silicone composition as claimed in any of the preceding claims wherein the component (C) is chloroplatinic acid or a solution or complex thereof.

15. A silicone composition as claimed in any of the preceding claims which contains a reaction retardant for the activity of component (C).

16. A silicone composition as claimed in any of the preceding claims whereof the viscosity is 50 to 20,000cSt at 25°C.

## Patentansprüche

1. Lösemittelfreie Silikonmasse für Trennpapier, umfassend:
(A) 100 Gewichtsteile eines Organopolysiloxans, das pro Molekül mindestens zwei siliziumgebundene Alkenylgruppen und mindestens eine siliziumgebundene Gruppe der Formel [X] aufweist 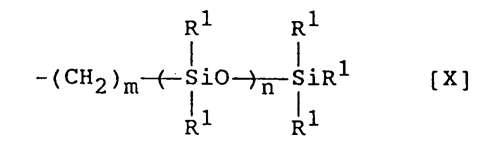 (worin jede Gruppe R¹, die gleich oder verschieden sein kann, eine einwertige Kohlenwasserstoffgruppe darstellt, n eine ganze Zahl von 5 bis 100 bedeutet und m eine ganze Zahl von 2 bis 8 bedeutet),
wobei der Alkenylgruppenanteil des Organopolysiloxans in dem Bereich von 0,5 bis 10,0 Mol-% liegt;
(B) 1 bis 100 Gewichtsteile eines Organowasserstoffpolysiloxans mit mindestens zwei siliziumgebundenen Wasserstoffatomen pro Molekül; und
(C) eine katalytisch wirksame Menge eines Platinkatalysators;
mit der Maßgabe, daß die Summe der Zahl der Alkenylgruppen pro Molekül in Bestandteil (A) und der siliziumgebundenen Wasserstoffatome pro Molekül in Bestandteil (B) mindestens 5 ist.

2. Silikonmasse nach Anspruch 1, worin das Organopolysiloxan von Bestandteil (A) eine der Strukturen der Formeln (1), (2) und (3) aufweist: 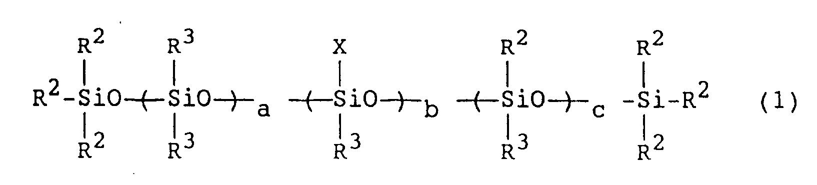 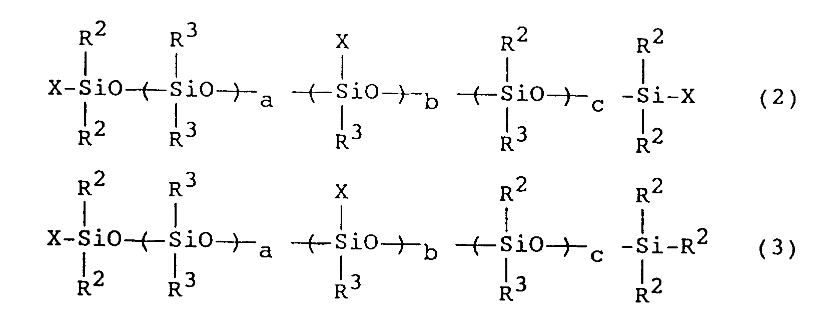 (worin X wie in Anspruch 1 definiert ist; a, b und c positive ganze Zahlen sind; und jede der Gruppen R¹, R² und R³, die gleich oder verschieden sein können, ausgewählt sind aus Alkyl-, Aryl-, Aralkyl- und Cycloalkylgruppen, mit der Maßgabe, daß R² zusätzlich eine Alkenylgruppe sein kann, und solche Gruppen substituiert mit Halogenatomen oder Cyanogruppen.

3. Silikonmasse nach Anspruch 2, worin etwa 80 Mol-% der Gruppen R¹, R² und R³ Methylgruppen sind.

4. Silikonmasse nach Anspruch 2 oder Anspruch 3, worin die Alkenylgruppen R² Vinyl oder Allyl sind.

5. Silikonmasse nach einem der vorangehenden Ansprüche, worin m 2 oder 3 ist.

6. Silikonmasse nach einem der Ansprüche 2 bis 5, worin das Verhältnis von b zu (a+b) 0,001 bis 0,1 ist.

7. Silikonmasse nach einem der vorangehenden Ansprüche, worin die Alkenylgruppe, die in dem Organopolysiloxan von Bestandteil (A) enthalten ist, Vinyl darstellt.

8. Silikonmasse nach einem der vorangehenden Ansprüche, worin der Anteil der Alkenylgruppe in dem Organopolysiloxan von Bestandteil (A) 1,0 bis 8,0 Mol-% ist.

9. Silikonmasse nach einem der vorangehenden Ansprüche, worin das Organowasserstoffpolysiloxan von Bestandteil (B) mindestens drei siliziumgebundene Wasserstoffatome pro Molekül aufweist.

10. Silikonmasse nach einem der vorangehenden Ansprüche, worin das Organowasserstoffpolysiloxan von Bestandteil (B) Methylwasserstoffpolysiloxan darstellt.

11. Silikonmasse nach einem der Ansprüche 1 bis 9, worin mindestens 90 Mol-% der siliziumgebundenen organischen Gruppen in dem Organowasserstoffpolysiloxan von Bestandteil (B) Methylgruppen sind.

12. Silikonmasse nach einem der vorangehenden Ansprüche, worin die Viskosität von Bestandteil (B) 10 bis 500 cSt bei 25°C ist.

13. Silikonmasse nach einem der vorangehenden Ansprüche, worin die Menge von Bestandteil (C) 1 bis 1 000 ppm in Form des Platingehalts, bezogen auf das Gewicht von Bestandteil (A), ist.

14. Silikonmasse nach einem der vorangehenden Ansprüche, worin der Bestandteil (C) Chloroplatinsäure oder eine Lösung oder ein Komplex davon ist.

15. Silikonmasse nach einem der vorangehenden Ansprüche, die ein Reaktionsverzögerungsmittel zur Wirkung von Bestandteil (C) enthält.

16. Silikonmasse nach einem der vorangehenden Ansprüche, mit einer Viskosität von 50 bis 20 000 cSt bei 25°C.

## Revendications

1. Composition de silicone sans solvant pour papier anti-adhésif, comprenant :
(A) 100 parties en poids d'un polyorganosiloxane ayant par molécule au moins deux groupes alcényle liés au silicium et au moins un groupe lié au silicium de formule [X] 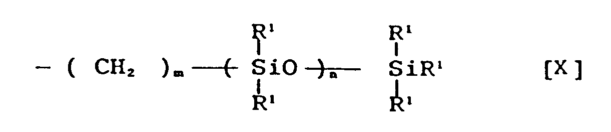 (dans laquelle les groupes R¹, qui peuvent être identiques ou différents, représentent chacun un groupe hydrocarboné monovalent, n est un entier de 5 à 100 et m est un entier de 2 à 8),
la teneur de ce polyorganosiloxane en groupes alcényle étant comprise dans l'intervalle de 0,5 à 100 % en moles;
(B) de 1 à 100 parties en poids d'un polyorganohydrogénosiloxane ayant par molécule au moins deux atomes d'hydrogène liés au silicium; et
(C) une quantité à effet catalytique d'un catalyseur au platine;
du moment que la somme du nombre des groupes alcényle par molécule du constituant (A) et des atomes d'hydrogène liés au silicium par molécule du constituant (B) est d'au moins 5.

2. Composition de silicone selon la revendication 1, dans laquelle le polyorganosiloxane représentant le constituant (A) a l'une quelconque des structures ayant les formules (1), (2) et (3) : 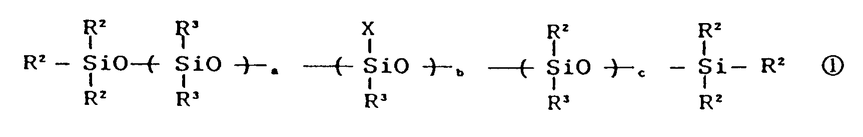 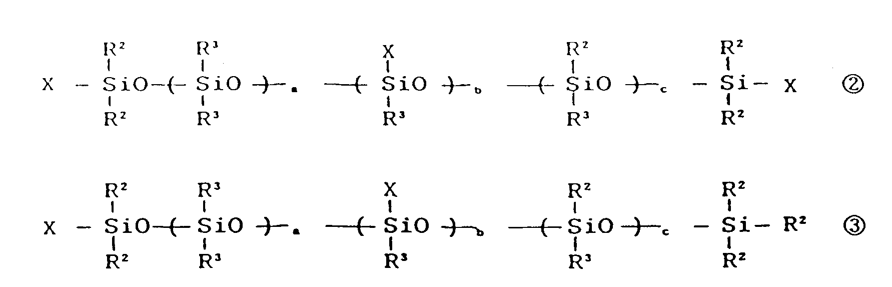 (où X est tel que défini dans la revendication 1 ; a, b et c sont des entiers positifs ; et les groupes R¹, R² et R³, qui peuvent être identiques ou différents, sont choisis chacun parmi l'ensemble comprenant les groupes alkyle, aryle, aralkyle et cycloalkyle, du moment que R² peut être de plus un groupe alcényle, et ces groupes substitués par des atomes d'halogène ou des groupes cyano.

3. Composition de silicone selon la revendication 2, dans laquelle environ 80 % en moles des groupes R¹, R² et R³ sont des groupes méthyle.

4. Composition de silicone selon la revendication 2 ou la revendication 3, dans laquelle les groupes alcényle R² sont des groupes vinyle ou allyle.

5. Composition de silicone selon l'une quelconque des revendications précédentes, dans laquelle m vaut 2 ou 3.

6. Composition de silicone selon l'une quelconque des revendications 2 à 5, dans laquelle le rapport de b à (a+b) est compris entre 0,001 et 0,1.

7. Composition de silicone selon l'une quelconque des revendications précédentes, dans laquelle le groupe alcényle contenu dans le polyorganosiloxane représentant le constituant (A) est le groupe vinyle.

8. Composition de silicone selon l'une quelconque des revendications précédentes, dans laquelle la teneur en le groupe alcényle du polyorganosiloxane représentant le constituant (A) est de 1,0 à 8,0 % en moles.

9. Composition de silicone selon l'une quelconque des revendications précédentes, dans laquelle le polyorganohydrogénosiloxane représentant le constituant (B) possède par molécule au moins trois atomes d'hydrogène liés au silicium.

10. Composition de silicone selon l'une quelconque des revendications précédentes, dans laquelle le polyorganohydrogénosiloxane représentant le constituant (B) est le polyméthylhydrogénosiloxane.

11. Composition de silicone selon l'une quelconque des revendications 1 à 9, dans laquelle au moins 90 % en moles des groupes organiques liés au silicium se trouvant dans le polyorganohydrogénosiloxane représentant le constituant (B) sont des groupes méthyle.

12. Composition de silicone selon l'une quelconque des revendications précédentes, dans laquelle la viscosité du constituant (B) est de 10 à 500 cSt à 25°C.

13. Composition de silicone selon l'une quelconque des revendications précédentes, dans laquelle la quantité du constituant (C) est de 1 à 1000 ppm, exprimée par la teneur en platine par rapport au poids du constituant (A).

14. Composition de silicone selon l'une quelconque des revendications précédentes, dans laquelle le constituant (C) est l'acide chloroplatinique ou une solution ou un complexe de ce dernier.

15. Composition de silicone selon l'une quelconque des revendications précédentes, qui contient un agent retardateur de réaction retardant l'activité du constituant (C).

16. Composition de silicone selon l'une quelconque des revendications précédentes, dont la viscosité à 25°C est de 50 à 20 000 cSt.
